# EUROPEAN PATENT SPECIFICATION

(11) **EP 1 415 389 B1**
(45) Date of publication and mention of the grant of the patent: **17.09.2008**
(21) Application number: 02760305.9
(22) Date of filing: 31.07.2002
(51) Int. Cl.: H02M 7/06, H02H 3/34

(54) **NEUTRAL POLE LOCATION INDEPENDENT EARTH LEAKAGE DETECTION CIRCUIT**
NEUTRALLEITERPOSITIONSUNABHÄNGIGE FEHLERSTROMDETEKTIONSSCHALTUNG
CIRCUIT DE DETECTION DE PERTE A LA MASSE INDEPENDANT DE LA POSITION DU NEUTRE

(30) Priority: 31.07.2001 ES 200101802
(43) Date of publication of application: 06.05.2004
(73) Proprietor: GE Power Controls Iberica, S.L., 08225 Terrassa, Barcelona (ES)
(72) Inventor: GUILLE, Serge, F-02690 Essigny Le Grand (FR); PLANAS COMERMA, Pere, E-08223 Terrassa, Barcelona (ES)
(74) Representative: Goode, Ian Roy
(86) International application number: PCT/EP2002/008629
(87) International publication number: WO 2003/012967

(56) References cited:
- EP-A- 0 326 281
- EP-A- 0 561 149
- DE-A- 2 653 453
- US-A- 3 641 374
- US-A- 4 131 929

## Description

### BACKGROUND OF THE INVENTION

An earth leakage detection device is generally installed in an electrical power distribution circuit in conjunction with a circuit breaker. The earth leakage detection device detects the existence of certain predefined earth leakage current levels. If such current levels exist, the earth leakage detection device causes the circuit breaker to trip, thus stopping current flow to the protected circuit. Together, the earth leakage detection device and the circuit breaker provide overcurrent and earth leakage protection to the distribution circuit (generally known as a differential circuit breaker).

A conventional earth leakage detection device generally comprises a housing in which different mechanical, electrical and electronic elements are enclosed. This housing can be separate from, or integral to, the housing for the associated circuit breaker. Within the housing, the earth leakage detection device includes a plurality of conductive straps, one strap being provided for each pole of the electrical distribution circuit. Each of these straps passes through a torous-shaped, ferrous core mounted within the housing. The straps passing through the toroidal core form the primary winding of a current transformer. A secondary winding of the current transformer is electrically connected to earth leakage detection electronics (control circuitry) mounted within the housing. The current induced in the secondary winding is sensed by the earth leakage detection circuitry, which determines the level of current leakage to earth. If detected current level is greater than a predetermined current threshold setting, the earth leakage detection circuitry will provide a trip signal to an electromechanical trip/reset mechanism located within the earth leakage detection device housing. In response to the trip signal, the trip/reset mechanism will trip an operating mechanism within the circuit breaker to stop current flow in the protected circuit.

The electronic detection circuitry receives its operating power from a power supply circuit. In an earth leakage detection device designed for a four-pole power distribution circuit (three phases and a neutral line), the power supply circuit includes three leads, with each lead attached to a different phase. However, for four-pole power distribution circuits, it is well known that some countries prefer the neutral connection on the left pole while others prefer the neutral connection on the right pole. If an earth leakage detection device designed for a left pole neutral connection is used in a distribution system with a right pole neutral, or viceversa, the response time of the power supply circuit is almost doubled. A delay in the response time of the power supply circuit will delay the protective capability of the earth leakage detection device during start-up of the power distribution circuit. To prevent this start-up delay, manufacturers of earth leakage detection devices produce devices with different power supply circuits for use in different countries. However, the manufacturing and logistics costs required for such products are greater than the manufacturing and logistics costs required for a single device that can be used in any country.

In US-A-4 131 929 a bridge circuit includes an eight-leg full wave rectifier bridge is connected to rectify the phase and neutral currents used with one or more resistive elements to provide instantaneous D.C. voltage outputs at least once every current cycle. DE 26 53 453 A also discloses an earth leakage detection four phase circuit breaker including a full wave rectifier bridge circuit.

### BRIEF DESCRIPTION OF THE INVENTION

The above described and other drawbacks and deficiencies of the prior art are overcome or alleviated by a neutral pole location independent power supply circuit. The neutral pole location independent power supply circuit for conducting operating power from a power distribution circuit to control circuitry includes: a first leg including a first diode and a second diode, where the first leg is configured for electrical connection to a first phase of the power distribution circuit at a point between said first diode and said second diode via a first resistance; a second leg including a third diode and a fourth diode, where the second leg is configured for electrical connection to a second phase of the power distribution circuit at a point between said third diode and said fourth diode via a second resistance; a third leg including a fifth diode and a sixth diode, where the third leg is configured for electrical connection to a third phase of the power distribution circuit at a point between said fifth diode and said sixth diode via a third resistance; a fourth leg including a seventh diode and an eighth diode, where the fourth leg is configured for electrical connection to a neutral line of the power distribution circuit at a point between said seventh diode and said eighth diode via a forth resistance, and where the first, second, third and fourth resistances are equivalent to each other.

### BRIEF DESCRIPTION OF THE DRAWINGS

Referring now to the drawings wherein like items are numbered alike:
Figure 1 is a schematic diagram of an earth leakage detection device including a neutral pole location independent power supply circuit connected to a distribution circuit having a right side neutral pole location ;
Figure 2 is a schematic diagram of an earth leakage detection device including the neutral pole location independent power supply circuit connected to a distribution circuit having a left side neutral pole location; and
Figure 3 is a graph depicting voltage as a function of time during the startup of the neutral pole location independent power supply circuit of Figure 1 and Figure 2.

### DETAILED DESCRIPTION OF THE INVENTION

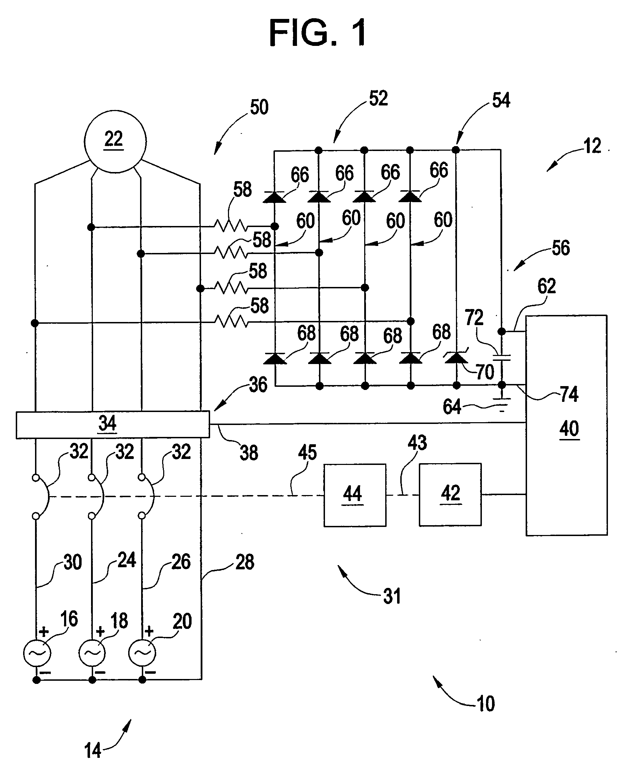

Referring to Figure 1, a schematic diagram of an earth leakage detection device 10 including a neutral pole location independent power supply circuit 12 is shown. Earth leakage detection device 10 is electrically connected to a four-pole power distribution circuit 14, between power sources 16, 18, 20 and a load 22. Four-pole power distribution circuit 14 includes three phases 24, 26, 30 and a neutral line 28, which is located to the right side of phases 24, 26 and 30 in Figure 1.

Earth leakage detection device 10 includes a housing (not shown), which can be separate from, or integral to, a housing (not shown) for an associated circuit breaker 31. Within earth leakage detection device 10, each pole 24, 26, 30 and 28 of the electrical distribution circuit 14 passes through a ferrous core 34 of a current transformer 36, thereby forming the primary windings of current transformer 36. A secondary winding 38 of the current transformer is electrically connected to control circuitry 40.

Control circuitry 40 is an analog circuit, a digital circuit, a microprocessor, an electronic circuit, or the like. Control circuitry 40 is powered by power supply circuit 12, and is configured to receive from current transformer 36 a sensed signal indicating an electrical property (e.g., voltage, current, resistance, and the like) in phases 24, 26 and 30 and neutral 28 of distribution circuit 14. Control circuitry 40 monitors the sensed signal to detect earth leakage in the power distribution circuit 14. If control circuitry 40 senses earth leakage, control circuitry 40 provides a trip signal to a trip/reset mechanism 42.

Trip/reset mechanism 42 is an electromechanical device, such as a solenoid or a solenoid actuated, spring driven latch, which is mechanically coupled to a trip lever 43. Trip/reset mechanism 42 is configured to receive a trip signal from control circuitry 40 and, in response to receiving the trip signal, unlatch an operating mechanism 44 in circuit breaker 31 via trip lever 43. Operating mechanism 44 is a spring-driven device that is mechanically coupled to contacts 32 in circuit breaker 31 via a breaker mechanism 45 (e.g., one or more movable contact arms). In a latched state, operating mechanism 44 and breaker mechanism 45 maintain contacts 32 in a closed circuit condition. In a closed circuit condition, contacts 32 conduct electrical current between power sources 16, 18 and 20 and load 22. When operating mechanism 44 is unlatched by trip lever 43, operating mechanism 44 and breaker mechanism 45 force contacts 32 into an open circuit condition in which the flow of electrical current between power sources 16, 18 and 20 and load 22 is stopped.

Power supply circuit 12 includes a resistor network 50, a full wave bridge rectifier 52, a voltage regulator 54, and a smoothing circuit 56. Resistor network 50 includes four equivalent resistances 58, each of which is connected in series between a leg 60 of full wave bridge rectifier 52 and phase 24, 26 or 30 or neutral line 28 of electrical distribution circuit 14.

Full wave bridge rectifier 52 includes legs 60, which are electrically connected across an input lead 62 of control circuitry 40 and a voltage reference 64 (e.g., ground). Each leg 60 includes diodes 66 and 68, with a cathode of diode 66 connected to input lead 62 of control circuit 40, an anode of diode 66 connected to a cathode of diode 68, and an anode of diode 68 connected to reference voltage 64. In each leg 60, resistance 58 is electrically connected to the anode of diode 66 and the cathode of diode 68. Voltage regulator 54 includes a zener diode 70 electrically connected at its cathode to input lead 62 of control circuitry 40 and electrically connected at its anode to voltage reference 64. Smoothing circuit 56 includes a capacitance 72 electrically connected across input lead 62 of control circuitry 40 and voltage reference 64. A second input lead 74 of control circuitry 40 is connected to voltage reference 64.

In operation, control circuitry 40 receives operating power from power supply circuit 12. In addition, control circuitry 40 receives a sensed signal indicating the electrical property in phases 24, 26 and 30 and neutral 28 from current transformer 36. Control circuitry 40 monitors the sensed signal to detect earth leakage. For example, control circuitry 40 may determine the existence of earth leakage by measuring the sum of the electric currents flowing simultaneously in each phase 24, 26 and 30 and neutral 28 of the distribution circuit 14. When the distribution circuit 14 down-line of the earth leakage detection device 10 functions normally, the sum of the electric current that flows simultaneously though the phases 24, 26 and 30 and neutral 28 is essentially equal to zero. If there is earth leakage, the sum of the electric currents that flow simultaneously through the phases 24, 26 and 30 and neutral 28 will not be equal to zero and an electric current will be induced in secondary winding 38 of transformer 36. The current induced in secondary winding 38 is sensed by control circuitry 40, which determines the level of current leakage to earth. If detected current level is greater than a predetermined current threshold setting, control circuitry 40 will provide a trip signal to trip/reset mechanism 42. In response to receiving the trip signal, trip/reset mechanism 42 will mechanically actuate operating mechanism 44, which mechanically separates contacts 32 to stop the flow of electrical current in phases 24, 26 and 30.

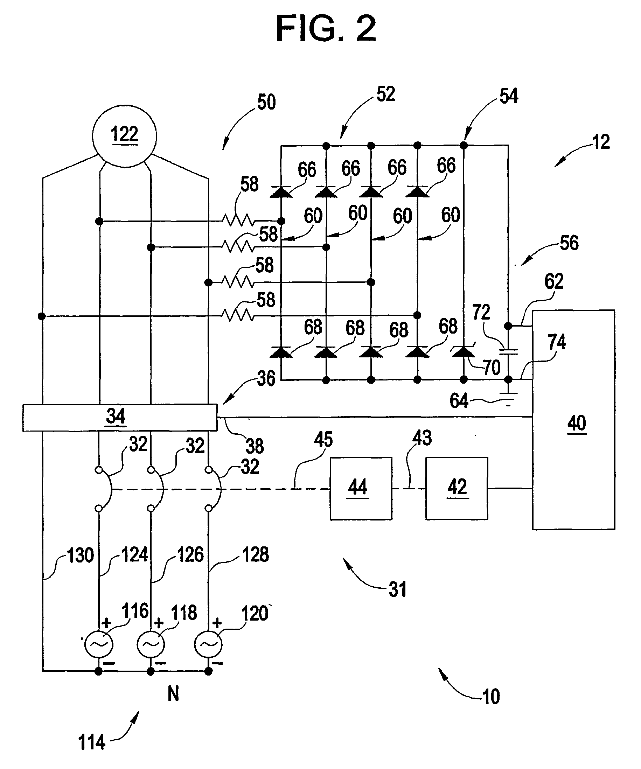

Referring to Figure 2, earth leakage detection device 10 is connected to a four-pole power distribution circuit 114 having a left side neutral pole location. Four-pole power distribution circuit includes three phases 124, 126 and 128, and a neutral line 130 that connect power sources 116, 118 and 120 to load 122. Neutral line 130 is located to the left side of phases 124, 126 and 128. Because legs 60 are similar to each other and resistances 58 are equivalent to each other, power supply circuit 12 will function in the manner described herein above whether it is installed in a right side neutral pole location, as shown in Figure 1 or a left side neutral pole location, as shown in Figure 2.

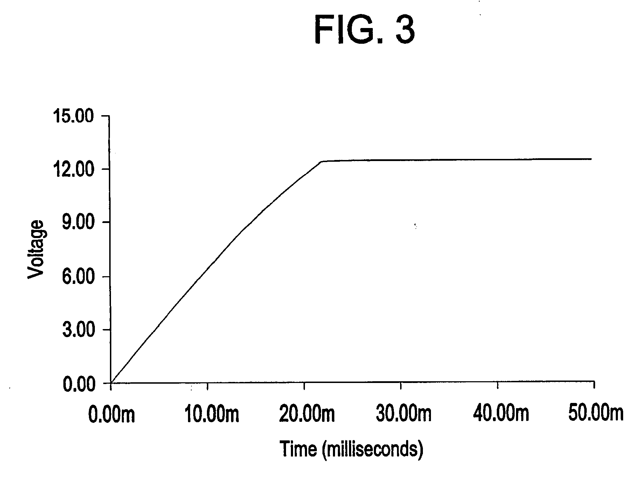

To provide earth leakage protection immediately after contacts 32 are closed, power supply circuitry 12 must quickly provide operating power to control circuitry 40. Figure 3 is a graph depicting voltage as a function of time during the startup of the neutral pole location independent power supply circuit 12 of Figures 1 and 2. Power supply circuit 12 will provide a similar response time whether the neutral line 30 is on the right pole, as shown in Figure 1, or the neutral line 30 is on the left pole, as shown in Figure 2.

Unlike earth leakage detection devices of the prior art, in which response time can be greatly decreased if the device is connected to a power distribution circuit having a left side neutral pole location or a right side neutral pole location, an earth leakage detection device including neutral pole location independent power supply circuit 12 ensures a fast response time regardless of whether it is used in a power distribution circuit having a left side neutral pole location or a right side neutral pole location. Because neutral pole location independent power supply circuit 12 can be used with any neutral pole configuration, power supply circuit 12 reduces the manufacturing and logistics costs below that possible for power supply circuits of the prior art, which require a manufacturer to manufacture, store, and supply a different power supply for each different neutral pole configuration.

While the invention has been described with reference to a preferred embodiment, it will be understood by those skilled in the art that various changes may be made and equivalents may be substituted for elements thereof without departing from the scope of the invention, as defined by the appended claims.

## Claims

1. A neutral pole location independent power supply circuit (12) for conducting operating power from a power distribution circuit (14) to control circuitry (40), said neutral pole independent power supply circuit comprising:
a first leg (60) including a first diode (66) and a second diode (68), said first leg is configured for electrical connection to a first phase (24) of the power distribution circuit at a point between said first diode and said second diode via a first resistance (58);
a second leg (60) including a third diode (66) and a fourth diode (68), said second leg is configured for electrical connection to a second phase (26) of the power distribution circuit at a point between said third diode and said fourth diode via a second resistance (58);
a third leg (60) including a fifth diode (66) and a sixth diode (68), said third leg is configured for electrical connection to a third phase (30) of the power distribution circuit at a point between said fifth diode and said sixth diode via a third resistance (58);
**characterised by**:
a fourth leg (60) including a seventh diode (66) and an eighth diode (68), said fourth leg is configured for electrical connection to a neutral line (28) of the power distribution circuit at a point between said seventh diode and said eighth diode via a forth resistance (58), wherein said first, second, third and fourth resistances (58) are equivalent to each other.

2. The neutral pole location independent power supply circuit of claim 1, wherein a cathode of said first diode (66) is electrically connected to a power input lead (62) of the control circuitry, a cathode of said third diode (66) is electrically connected to said power input lead of the control circuitry, a cathode of said fifth diode (66) is electrically connected to said power input lead of the control-circuitry, and a cathode of said seventh diode (66) is electrically connected to said power input lead of the control circuitry.

3. The neutral pole location independent power supply circuit of claim 2, wherein an anode of said second diode (68) is electrically connected to a voltage reference (64), an anode of said fourth diode (68) is electrically connected to said voltage reference, an anode of said sixth diode (68) is electrically connected to said voltage reference, and an anode of said eighth diode (68) is electrically connected to said voltage reference.

4. The neutral pole location independent power supply circuit of claim 1, further comprising:
a voltage regulator electrically connected between said power input lead of the control circuitry and said voltage reference.

5. An earth leakage detection device for a power distribution circuit; the power distribution circuit including a first phase, a second phase, a third phase, and a neutral line, said earth leakage detection device comprising:
a core disposed around the first phase, the second phase, the third phase, and the neutral line of the power distribution circuit; a secondary winding wrapped around said core; control circuitry electrically connected to said secondary winding;
a full wave bridge rectifier electrically connected between said control circuitry and said four pole power distribution circuit, said full wave bridge rectifier comprising a neutral pole location independent power supply circuit as claimed in claim 1.

6. The earth leakage detection device of claim 5, wherein a cathode of said first diode (66) is electrically connected to a power input lead (62) of said control circuitry, a cathode of said third diode (66) is electrically connected to said power input lead of said control circuitry, a cathode of said fifth diode (66) is electrically connected to said power input lead of said control circuitry, and a cathode of said seventh diode (66) is electrically connected to said power input lead of said control circuitry.

7. The earth leakage detection device of claim 6, wherein an anode of said second diode (68) is electrically connected to a voltage reference (64), an anode of said fourth diode (68) is electrically connected to said voltage reference, an anode of said sixth diode (68) is electrically connected to said voltage reference, and an anode of said eighth diode (68) is electrically connected to said voltage reference.

## Patentansprüche

1. Neutralleiterpositionsunabhängiger Stromversorgungsschaltkreis (12), um Betriebsstrom aus einem Stromverteilungsschaltkreis (14) zu einer Steuerschaltung (40) zu leiten, wobei der neutralleiterpositionsunabhängige Stromversorgungsschaltkreis aufweist:
einen ersten Zweig (60) mit einer ersten Diode (66) und einer zweiten Diode (68), wobei der erste Zweig für eine elektrische Verbindung mit einer ersten Phase (24) des Stromverteilungsschaltkreises an einem Punkt zwischen der ersten Diode und der zweiten Diode über einen ersten Widerstand (58) eingerichtet ist;
einen zweiten Zweig (60) mit einer dritten Diode (66) und einer vierten Diode (68), wobei der zweite Zweig für eine elektrische Verbindung mit einer zweiten Phase (26) des Stromverteilungsschaltkreises an einem Punkt zwischen der dritten Diode und der vierten Diode über einen zweiten Widerstand (58) konfiguriert ist;
einen dritten Zweig (60) mit einer fünften Diode (66) und einer sechsten Diode (68), wobei der dritte Zweig für eine elektrische Verbindung mit einer dritten Phase (30) des Stromverteilungsschaltkreises an einem Punkt zwischen der fünften Diode und der sechsten Diode über einen zweiten Widerstand (58) konfiguriert ist;
**gekennzeichnet durch**
einen vierten Zweig (60) mit einer siebenten Diode (66) und einer achten Diode (68), wobei der vierte Zweig für eine elektrische Verbindung mit einem Neutralleiter (28) des Stromverteilungsschaltkreises an einem Punkt zwischen der siebenten Diode und der achten Diode über einen vierten Widerstand (58) definiert ist, wobei die ersten, zweiten, dritten und vierten Widerstände (58) zueinander äquivalent sind.

2. Neutralleiterpositionsunabhängiger Stromversorgungsschaltkreis nach Anspruch 1, wobei eine Kathode der ersten Diode (66) elektrisch mit einem Stromeingangsleiter (62) der Steuerschaltung verbunden ist, eine Kathode der dritten Diode (66) elektrisch mit dem Stromeingangsleiter der Steuerschaltung verbunden ist, eine Kathode der fünften Diode (66) elektrisch mit dem Stromeingangsleiter der Steuerschaltung verbunden ist, und eine Kathode der siebenten Diode (66) elektrisch mit dem Stromeingangsleiter der Steuerschaltung verbunden ist.

3. Neutralleiterpositionsunabhängiger Stromversorgungsschaltkreis nach Anspruch 2, wobei eine Anode der zweiten Diode (68) elektrisch mit einer Spannungsreferenz (64) verbunden ist, eine Anode der vierten Diode (68) elektrisch mit der Spannungsreferenz verbunden ist, eine Anode der sechsten Diode (68) elektrisch mit der Spannungsreferenz verbunden ist, und eine Anode der achten Diode (68) elektrisch mit der Spannungsreferenz verbunden ist,

4. Neutralleiterpositionsunabhängiger Stromversorgungsschaltkreis nach Anspruch 1, ferner aufweisend:
einen Spannungsregler, der elektrisch zwischen den Stromeingangsleiter der Steuerschaltung und die Spannungsreferenz geschaltet ist.

5. Erdfehlerstrom-Detektionsvorrichtung für einen Stromverteilungsschaltkreis, wobei der Stromverteilungsschaltkreis eine erste Phase, eine zweite Phase, eine dritte Phase und einen Neutralleiter enthält, wobei die Erdfehlerstrom-Detektionsvorrichtung aufweist:
einen Kern, der um die erste Phase, die zweite Phase, die dritte Phase und den Neutralleiter des Stromverteilungsschaltkreises herum angeordnet ist; eine Sekundärwicklung, die um den Kern gewickelt ist; eine Steuerschaltung, die elektrisch mit der Sekundärwicklung verbunden ist;
einen Vollwellen-Brückengleichrichter, der elektrisch zwischen die Steuerschaltung und den Vierleiter-Stromverteilungsschaltkreis geschaltet ist, wobei der Vollwellen-Brückengleichrichter einen neutralleiterpositionsunabhängigen Stromversorgungsschaltkreis nach Anspruch 1 aufweist.

6. Erdfehlerstrom-Detektionsvorrichtung nach Anspruch 5, wobei eine Kathode der ersten Diode (66) elektrisch mit einem Stromeingangsleiter (62) der Steuerschaltung verbunden ist, eine Kathode der dritten Diode (66) elektrisch mit dem Stromeingangsleiter der Steuerschaltung verbunden ist, eine Kathode der fünften Diode (66) elektrisch mit dem Stromeingangsleiter der Steuerschaltung verbunden ist, eine Kathode der siebenten Diode (66) elektrisch mit dem Stromeingangsleiter der Steuerschaltung verbunden ist.

7. Erdfehlerstrom-Detektionsvorrichtung nach Anspruch 6, wobei eine Anode der zweiten Diode (68) elektrisch mit einer Spannungsreferenz (64) verbunden ist, eine Anode der vierten Diode (68) elektrisch mit der Spannungsreferenz verbunden ist, eine Anode der sechsten Diode (68) elektrisch mit der Spannungsreferenz verbunden ist, und eine Anode der achten Diode (68) elektrisch mit der Spannungsreferenz verbunden ist,

## Revendications

1. Circuit (12) d'alimentation électrique indépendant d'une position du neutre pour conduire une puissance de fonctionnement d'un circuit (14) de distribution électrique à des circuits (40) de commande, ledit circuit d'alimentation électrique indépendant du neutre comprenant :
une première branche (60) comprenant une première diode (66) et une deuxième diode (68), ladite première branche est configurée pour un branchement électrique avec une première phase (24) du circuit de distribution électrique au niveau d'un point entre ladite première diode et ladite deuxième diode via une première résistance (58) ;
une deuxième branche (60) comprenant une troisième diode (66) et une quatrième diode (68), ladite deuxième branche est configurée pour un branchement électrique avec une deuxième phase (26) du circuit de distribution électrique au niveau d'un point entre ladite troisième diode et ladite quatrième diode via une deuxième résistance (58) ;
une troisième branche (60) comprenant une cinquième diode (66) et une sixième diode (68), ladite troisième branche est configurée pour un branchement électrique avec une troisième phase (30) du circuit de distribution électrique au niveau d'un point entre ladite cinquième diode et ladite sixième diode via une troisième résistance (58) ;
**caractérisé par** :
une quatrième branche (60) comprenant une septième diode (66) et une huitième diode (68), ladite quatrième branche est configurée pour un branchement électrique avec une ligne neutre (28) du circuit de distribution électrique au niveau d'un point entre ladite septième diode et ladite huitième diode via une quatrième résistance (58), dans lequel lesdites première, deuxième, troisième et quatrième résistances (58) sont équivalentes les unes par rapport aux autres.

2. Circuit d'alimentation électrique indépendant de la position du neutre selon la revendication 1, **caractérisé en ce qu'**une cathode de ladite première diode (66) est reliée électriquement à un fil (62) d'entrée de puissance des circuits de commande, une cathode de ladite troisième diode (66) est reliée électriquement audit fil d'entrée de puissance des circuits de commande, une cathode de ladite cinquième diode (66) est reliée électriquement audit fil d'entrée de puissance des circuits de commande, et une cathode de ladite septième diode (66) est reliée électriquement audit fil d'entrée de puissance des circuits de commande.

3. Circuit d'alimentation électrique indépendant de la position du neutre selon la revendication 2, **caractérisé en ce qu'**une anode de ladite deuxième diode (68) est reliée électriquement à une référence (64) de tension, une anode de ladite quatrième diode (68) est reliée électriquement à ladite référence de tension, une anode de ladite sixième diode (68) est reliée électriquement à ladite référence de tension, et une anode de ladite huitième diode (68) est reliée électriquement à ladite référence de tension.

4. Circuit d'alimentation électrique indépendant de la position du neutre selon la revendication 1, comprenant en outre :
un régulateur de tension relié électriquement entre ledit fil d'entrée de puissance des circuits de commande et ladite référence de tension.

5. Dispositif de détection de fuites à la terre pour un circuit de distribution électrique ; le circuit de distribution électrique comprenant une première phase, une deuxième phase, une troisième phase, et une ligne neutre, ledit dispositif de détection de fuites à la terre comprenant :
un noyau placé autour de la première phase, de la deuxième phase, de la troisième phase, et de la ligne neutre du circuit de distribution électrique ; un enroulement secondaire enroulé autour dudit noyau ; des circuits de commande reliés électriquement audit enroulement secondaire ;
un circuit de redresseur avec pont à onde entière relié électriquement entre lesdits circuits de commande et ledit circuit de distribution électrique à quatre pôles, ledit circuit de redresseur avec pont à onde entière comprenant un circuit d'alimentation électrique indépendant de la position du neutre selon la revendication 1.

6. Dispositif de détection de fuites à la terre selon la revendication 5, **caractérisé en ce qu'**une cathode de ladite première diode (66) est reliée électriquement à un fil (62) d'entrée de puissance desdits circuits de commande, une cathode de ladite troisième diode (66) est reliée électriquement audit fil d'entrée de puissance desdits circuits de commande, une cathode de ladite cinquième diode (66) est reliée électriquement audit fil d'entrée de puissance desdits circuits de commande, et une cathode de ladite septième diode (66) est reliée électriquement audit fil d'entrée de puissance desdits circuits de commande.

7. Dispositif de détection de fuites à la terre selon la revendication 6, **caractérisé en ce qu'**une anode de ladite deuxième diode (68) est reliée électriquement à une référence (64) de tension, une anode de ladite quatrième diode (68) est reliée électriquement à ladite référence de tension, une anode de ladite sixième diode (68) est reliée électriquement à ladite référence de tension, et une anode de ladite huitième diode (68) est reliée électriquement à ladite référence de tension.
